# EUROPEAN PATENT SPECIFICATION

(11) **EP 1 445 067 B1**
(45) Date of publication and mention of the grant of the patent: **30.08.2006**
(21) Application number: 04001342.7
(22) Date of filing: 22.01.2004
(51) Int. Cl.: B24B 37/04, B24D 3/32

(54) **Polishing pad and method of manufacturing semiconductor devices**
Polierkissen und Verfahren zur Herstellung von Halbleiterbauelementen
Tampon de polissage et procédé pour la fabrication des dispositifs semiconducteurs

(30) Priority: 06.02.2003 JP 2003029560
(43) Date of publication of application: 11.08.2004
(73) Proprietor: JSR Corporation, Tokyo (JP)
(72) Inventor: Minamihaba, Gaku, c/o Intellectual Property Div., Minato-ku, Tokyo (JP); Tateyama, Yoshikuni c/o Intellectual Property Div., Minato-ku, Tokyo (JP); Yano, Hiroyuki, c/o Intellectual Property Div., Minato-ku, Tokyo (JP); Komura, Tomoo, Chuo-ku, Tokyo (JP); Hasegawa, Kou, Chuo-ku, Tokyo (JP)
(74) Representative: TBK-Patent

(56) References cited:
- EP-A- 1 188 807
- EP-A- 1 201 368
- EP-A- 1 394 202
- WO-A-01/91971
- WO-A-01/94074
- WO-A-02/070200
- JP-A- 2000 349 053
- US-A1- 2002 127 955

## Description

The present invention relates to a polishing pad and a method of manufacturing a semiconductor device, and in particular, to a polishing pad employed in CMP (Chemical Mechanical Polishing) and the method of manufacturing a semiconductor device using the polishing pad.

In recent years, concomitant with the trend to further increase the integration of LSIs, the techniques to further refine the wirings are now being rapidly advanced to such an extent that the design rule thereof is now getting as small as less than 0.1 µm. Additionally, in order to alleviate the delay of RC wiring, it is considered imperative to employ a novel material. Under the circumstances, it is now being tried to employ Cu which is low in electrical resistance (p: 1.8 µΩcm) as a conductive material, and to employ an insulating film of low relative dielectric constant (k: <2.5) as an electrical insulating material.

Cu wirings are, in most cases, buried in an insulating film by using CMP technique so as to be formed as a damascene wiring. This CMP is generally performed in such a way that slurry is fed to the surface to be polished (hereinafter referred to as polishing surface) and a polishing pad is contacted with the polishing surface and rotated to perform the polishing. On this occasion, the polishing performance is greatly influenced by the quantity of slurry that can be retained by the surface of the polishing pad as well as by the grain size of the abrasive grains contained in the slurry.

For example, if the polishing is performed by using slurry containing relatively coarse abrasive grains, scratches are generated on the polishing surface after polishing. At present, although the diameter of the primary particles of colloidal silica produced by using sol-gel method can be controlled to 0.02 µm (1σ: 0.005 µm), the primary particles flocculate depending on the conditions particularly when slurry having such a colloidal silica dispersed in a solvent is left to stand, thereby allowing coarse secondary particles having a maximum diameter of 10 µm or more to grow. As a matter of fact, when coarse particle having a diameter of 1 µm or so is existed in the slurry, it will give great influences on the generation of scratch.

Even when the CMP is performed by using a slurry having no abrasive grain included therein, it is quite conceivable that the particles having a particle diameter of the order of microns that may be originated from the peeling of semiconductor substrate, dust and reaction products may generate scratches.

In any case, the scratch that has been generated on the polishing surface as a result of the polishing thereof may generate short of circuit, thereby inviting the malfunction of a semiconductor device. Therefore, it is desired that only relatively small particles or effective particles which are capable of contributing to the polishing are retained on the surface of a polishing pad, and that coarse particles whose diameter is larger than required as well as any factor that may generate flaw such as dust are quickly removed from the surface of a polishing pad.

Further, an insulating film having a low relative dielectric constant in which a conductive material such as Cu is to be buried is, in most cases, formed of a hydrophobic material containing an organic component. Therefore, on the occasion of burying a conductive material to expose the surface of this film having a low relative dielectric constant, polishing friction increases, thus occurring the peeling of the film. Since the substances created from the peeling of the film have almost the same size as that of coarse particles existing in the slurry, they may generate scratches on the polishing surface resulting from the polishing process. Moreover, since the hydrophobic material is liable to adsorb coarse particles, scratches may generate more vigorously or may become a nucleus through which the peeling of film generates.

Although it is possible to suppress scratches by using a soft polishing pad, it may become difficult to meet the severe design rule of semiconductor restricting that the erosion should be confined to not more than 300 angstroms. For this reason, a hard polishing pad having a compression elastic modulus of 150 MPa or more has been employed at present.

The conventional hard polishing pad is formulated based mainly on reducing the erosion as seen in IC1000 (trade name; Rodel Nitta Co., Ltd.) for instance. In such a conventional hard polishing pad, the retention of abrasive grains is achieved by the inclusion of cells (voids) or a water-soluble solid material, wherein the volume of voids or solid material is set to higher than 5% by volume based on the entire volume of matrix of polishing pad.

Such a CMP pad and a method of manufacturing a semiconductor device therewith and according to the preamble of claims 1 and 10 is disclosed in EP1201368.

There has been also proposed to employ a polishing pad wherein the number of large and small cells per unit area is regulated. Specifically, the number of closed cells having an average pore diameter of 0.3 mm or more is regulated to one/cm² or more and the number of closed cells having an average pore diameter of 0.1 mm or less is regulated to 100/cm² or less.

However, when the polishing is performed using such a polishing pad, it has been considered difficult to sufficiently reduce the generation of scratches on the polishing surface in the polishing process.

Incidentally, in the case of a polishing pad containing abrasive grains, it is proposed to regulate the ratio of cells in the polishing pad to 5% by volume or more in order to enhance the dispersibility of the abrasive grains and to secure a stable polishing performance. Since this polishing pad is a fixed abrasive grain-containing polishing pad, the polishing is performed by not supplying a slurry but supplying only water. Accordingly, in the employment of such a polishing pad, not only the quantity of slurry retained on the surface of polishing pad but also the interaction of slurry with polishing pad are not taken into consideration, and as a matter of fact, are no longer required to be taken into consideration in executing the polishing.

A CMP pad according to the present invention is provided according to claim 1 and a method of manufacturing a seminconductor device therewith is provided according to claim 10.

The invention can be more fully understood from the following detailed description when taken in conjunction with the accompanying drawings, in which:
FIGS. 1A and 1B respectively shows a cross-sectional view schematically illustrating the features of the section and surface of a polishing pad;
FIGS. 2A to 2C are cross-sectional views each illustrating the manufacturing process of a semiconductor device according to one embodiment of the present invention;
FIG. 3 is a perspective view illustrating the manufacturing process of a semiconductor device according to one embodiment of the present invention; and
FIGS. 4A and 4B are cross-sectional views each illustrating the manufacturing process of a semiconductor device according to another embodiment of the present invention.

Next, embodiments according to the present invention will be explained in detail as follows.

It has been found out by the present inventors that in order to enable the slurry that has been fed onto the surface of a polishing pad to be effectively applied to a surface to be treated (hereinafter being referred to simply as a treating surface) and to carry out the polishing of the treating surface while suppressing the generation of scratches on the treating surface, cells and/or a recessed portion-forming material, both being dispersed in the matrix of the polishing pad, should be controlled and optimized with respect to the ratio of occupying region and average diameter thereof. Incidentally, by the term "dispersion", it is intended to mean that cells and/or a recessed portion-forming material are distributed throughout the matrix while substantially retaining their inherent individual dimension without being flocculated with each other.

Further, by the term "recessed portion-forming material", it is intended to indicate a water soluble solid material which can be dissolved in water as it is contacted with water during the polishing operation, thereby enabling recessed portions to be formed on the surface of the polishing pad. In this case, the recessed portions formed on the surface of the polishing pad may be the traces of the water soluble solid materials. In the interior of the polishing pad however, the water soluble solid materials are left remained as they are.

When the ratio of region occupied by the cells and/or a recessed portion-forming material is confined within a prescribed range, the polishing pad is enabled to have the following functions. Namely, it becomes possible, due to the provision of such cells, to enable the slurry to be reliably retained on the surface of the polishing pad, thus providing appropriate flexibility to the polishing pad. Among the water soluble solid materials, those existing on the surface of the polishing pad function in the same manner as the aforementioned cells, while the others existing in the interior of the polishing pad function so as to provide the polishing pad with an appropriate hardness.

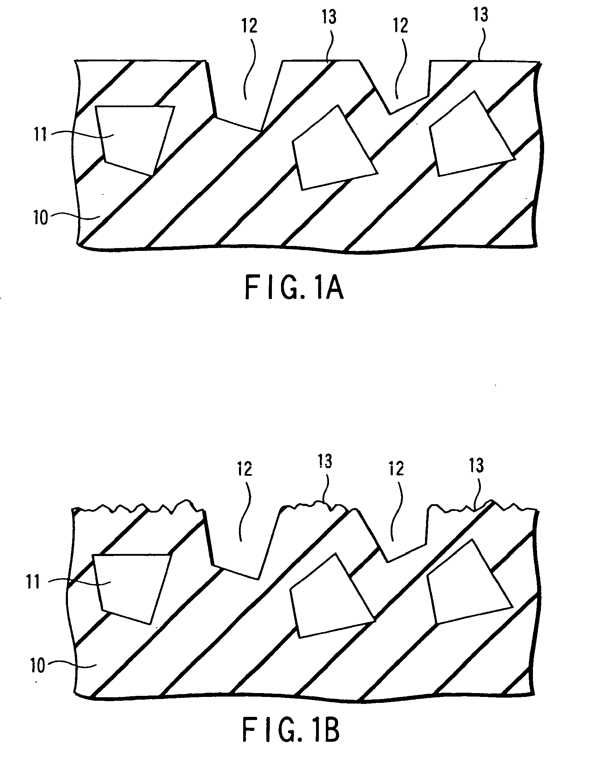

FIGS. 1A and 1B are cross-sectional views each schematically illustrating the features of the section and surface of a polishing pad, wherein FIG. 1A shows the features before the conditioning step, while FIG. 1B shows the features after the conditioning step.

As shown in FIG. 1A, regions 11 consisting of cells and/or water soluble solid material are dispersed throughout the matrix 10 made of an organic material. The surface of the polishing pad is constituted not only by step portions 12 which are caused to generate due to the existence of aforementioned regions 11, but also by field portions 13. The height and density of the step portions 12 are determined depending on the size and density of the regions 11 dispersed in the polishing pad. The field portions 13 may be assumed as being a major surface of the matrix, which faces a treating film during the polishing process.

As a result of conditioning conducted on the surface of polishing pad, fine roughness is generated on the surface of the field portions 13 as shown in FIG. 1B. The surface roughness Ra of the polishing pad should be confined to 1 to 5 µm, more preferably within the range of 1 to 3 µm. If the conditioning of the polishing pad is not performed, the surface roughness Ra of the polishing pad would become as small as 0.05 µm or less, so that it may become difficult to sufficiently retain the slurry. Irrespective of the kind of the slurry, the surface roughness Ra of the polishing pad after the conditioning should preferably be confined within the aforementioned range. Namely, in order to enhance the interaction between the slurry and the surface of the polishing pad by rendering the surface of the polishing pad hydrophilic, even when slurry not containing abrasive grains is employed, the surface roughness Ra should be confined to 5 µm or less.

In particular, when slurry containing abrasive grains is employed, it is more likely that scratches are easily formed on the polishing surface during the polishing process if the polishing pad which is capable of easily retaining coarse abrasive grains is employed. One example of such a polishing pad is one which includes therein an excessive number of cells or water soluble solid materials. A polishing pad having retention sites for coarse particles on the surface thereof, for example, a polishing pad having closed cells having a diameter of 0.3 mm or more also makes it difficult to suppress the generation of scratches.

In the case of the polishing pad according to the embodiments of the present invention, what is distributed throughout the matrix of polishing pad is merely a region consisting of cell and/or a water soluble solid material each having a predetermined diameter, and hence abrasive grains are not included therein. Namely, according to one embodiment of the present invention, the polishing pad is defined as comprising cells and/or a water soluble solid material both having an average diameter ranging from 0.05 µm to 290 µm and occupying a region ranging from 1% by volume to 4% by volume based on an entire volume of the polishing pad, and the balance formed of an organic material, thereby making it possible to suppress the generation of scratches on a polished surface.

An average diameter of the water soluble solid material is intended to mean an average diameter of water soluble solid particles included in a polishing pad, whereas an average diameter of the cells is intended to mean a value which can be obtained from the measurement of cells which can be observed, by SEM, on the surface of a polishing pad or on the cross-section of a polishing pad that can be obtained by cutting the polishing pad.

The matrix is generally constituted by a solidified body of an organic material because of easiness in molding it into a desired configuration and in providing it with a suitable degree of hardness and elasticity. As for the examples of organic material, they include thermoplastic resins, elastomers, rubber and curable resins (resins that can be cured by the effects of heat or light, such as thermocurable resin, photo-curable resin). These materials can be employed singly or in any combination thereof.

As for specific examples of the thermoplastic resins, they include, for example, 1,2-polybutadiene resin, ethylene-vinyl acetate copolymer, polyolefin resin such as polyethylene, styrene-based resin such as polystyrene and ABS resin, polyacrylic resin {(metha)acrylate-based resin}, vinyl ester-based resin (excluding acrylic resin), polyester-based resin, polyamide-based resin and polyacetal resin.

As for specific examples of the elastomers, they include, for example, diene elastomer; polyolefin elastomer (TPO); styrene type block copolymer-based elastomer such as styrene-butadiene-styrene block copolymer (SBS) and the hydrogenated block copolymer thereof (SEBS); thermoplastic elastomer such as thermoplastic polyurethane-based elastomer (TPU), thermoplastic polyester-based elastomer (TPEE) and polyamide-based elastomer (TPAE); silicone resin-based elastomer; and fluororesin-based elastomer.

As for specific examples of the rubber, they include, for example, butadiene rubber (high cis-butadiene rubber, low cis-butadiene rubber, etc.), isoprene rubber, styrene-butadiene rubber, conjugated diene-based rubber such as styrene-isoprene rubber, nitrile-based rubber such as acrylonitrile-butadiene rubber, acrylic rubber, ethylene-propylene rubber, ethylene-α-olefin-based rubber such as ethylene-propylene-diene-based rubber, butyl rubber, silicone rubber, fluorine-containing rubber, etc.

As for specific examples of the curable resins, they include, for example, urethane resin, epoxy resin, acrylic resin, unsaturated polyester resin, polyurethane-urea resin, urea-based resin, silicon-based resin, phenolic resin and vinyl ester resin.

These organic materials may be modified by the introduction thereto of acid anhydride group, carboxylic group, hydroxyl group, epoxy group or amino group. It is possible, by this modification, to adjust the affinity of these organic materials to water soluble solid materials to be discussed hereinafter or to slurry.

Although these organic materials can be partially or entirely cross-linked so as to turn them into a crosslinked polymer, they may be in the form of non-crosslinked polymer. Further, the matrix may be constituted by only a crosslinked polymer or by a mixture consisting of a crosslinked polymer and a non-crosslinked polymer. As for the method of crosslinking, there is not any particular limitation and hence it may be a chemical crosslinking where organic peroxide, sulfur or a sulfur compound is employed, or a radiation-induced crosslinking where the irradiation of electron beam is utilized.

By the term "water soluble" in the expression of "water soluble solid material", it is intended to denote the characteristics of a substance that when it is contacted with water, it can be released from the matrix. As explained hereinafter, this water soluble solid material is formed of particles of predetermined size and usually dispersed throughout the matrix. This water soluble solid material may be useful irrespective of the kind thereof, i.e. organic or inorganic.

As for the examples of organic water soluble solid material, they include dextrin, cyclodextrin, mannitol, sugars (lactose), cellulose (hydroxypropyl cellulose, methyl cellulose, etc.), starch, protein, polyvinyl alcohol, polyvinyl pyrrolidone, polyvinyl sulfonate, polyacrylic acid, polyethylene oxide, water soluble photosensitive resin, sulfonated polyisoprene, etc.

As for the examples of inorganic water soluble solid material, they include potassium acetate, potassium nitrate, potassium carbonate, potassium bicarbonate, potassium bromide, potassium phosphate, potassium sulfate, etc.

Since the organic water soluble solid material as well as the inorganic water soluble solid material are soluble in water, they are incapable of polishing a treating substrate.

For the purpose of adjusting the elution of these water soluble solid materials from the matrix, these water soluble solid materials may be subjected to a coupling treatment and/or a coating treatment.

These water soluble solid materials can be suitably selected depending on the combination thereof with the matrix and employed singly or in combination of two or more. In particular, it is preferable to employ, as a matrix, at least one selected from the group consisting of 1,2-polybutadiene resin, ethylene-vinyl acetate copolymer, polyethylene, polyester resin, diene elastomer, polyolefin elastomer, styrene type block copolymer-based elastomer, thermoplastic polyurethane-based elastomer, conjugated diene-based rubber, ethylene-α-olefin-based rubber and urethane resin, and to employ, as a water soluble solid material, at least one selected from the group consisting of dextrin and cyclodextrin, the water soluble solid material thus selected being subsequently distributed throughout the matrix thus selected.

The polishing pad comprising a matrix and a water soluble solid material which is distributed in the matrix can be manufactured according to the following method. First of all, an organic material constituting the matrix is allowed to melt and, at the same time, a water soluble solid material is kneaded together with the organic material to obtain a raw material for the polishing pad. Then, if it is not required to perform the crosslinking of the organic material, this raw material is allowed to cool and worked into a disk-like sheet having a diameter of 600 mm for example, thereby obtaining a polishing pad having the water soluble solid material dispersed therein.

On the other hand, when the organic material is required to be crosslinked, a chemical crosslinking agent may be employed as required and kneaded together with the organic material, thus adding the chemical crosslinking agent to the raw material for the polishing pad. When the crosslinking is to be performed, the raw material is subjected to heating up to a predetermined temperature required for executing the crosslinking of the organic material or subjected to the irradiation of radiation, thereby allowing the crosslinking reaction of the organic material to take place. Thereafter, the raw material is cooled and worked, in the same manner as explained above, into a disk-like sheet having a diameter of 600 mm for example, thereby obtaining a polishing pad having the water soluble solid material dispersed therein.

In order to retain the slurry effectively, trenches may be formed on the surface of the polishing pad. Although there is not any particular limitation with respect to the configuration of the trenches, it may be spiral, concentric, lattice-like or dot pattern-like configuration. Alternatively, the configuration of the trenches may be a composite of these configurations. These trenches can be formed on the surface of a sheet by cutting work for instance. Alternatively, a sheet may be molded by using a mold having trenches formed thereof, thereby forming the trenches simultaneous with the molding of the sheet.

The followings are explanation of one example of manufacturing a polishing pad wherein Pelprene S-2001 (trade name; thermoplastic polyester elastomer: Toyo Bouseki Co., Ltd.) was employed as an organic material, and Dexyparl (trade name; water soluble solid material β-cyclodextrin: Yokohama International Bio-Research Institute) of various average diameters were employed as a water soluble solid material.

First of all, the Pelprene S-2001 was heated at a temperature of 210°C to melt the Pelprene S-2001 and, at the same time, the Dexyparl employed as a water soluble solid material was added to the Pelprene S-2001, the resultant mixture being subsequently kneaded to obtain a raw material for the polishing pad. After being cooled, this raw material was worked into a disk-like sheet having a diameter of 600 mm, thus manufacturing 32 kinds of polishing pads, i.e. No. 1 through No. 32. Further, the same procedures as described above were repeated except that any kind of water soluble solid materials was not incorporated into the Pelprene S-2001, thereby manufacturing a polishing pad of No. 33. The thickness of these polishing pads was all set to about 2 mm.

Furthermore, a polyurethane polishing pad No. 34 with cells having an average diameter of 20 µm and distributed at a ratio of 3 vol.% based on the entire volume of the polishing pad was prepared.

The compression elastic modulus of these polishing pads No.1 through No.34 was all about 300 MPa.

**Table 1**

| Polishing pad No. | Water soluble solid materials | |
|---|---|---|
| | Average diameter (µm) | Content (vol.%) |
| 1 | 0.01 | 5 |
| 2 | 0.05 | 5 |
| 3 | 0.1 | 5 |
| 4 | 1 | 5 |
| 5 | 10 | 5 |
| 6 | 50 | 5 |
| 7 | 100 | 5 |
| 8 | 200 | 5 |
| 9 | 250 | 5 |
| 10 | 280 | 5 |
| 11 | 290 | 5 |
| 12 | 300 | 5 |
| 13 | 310 | 5 |
| 14 | 320 | 5 |
| 15 | 350 | 5 |
| 16 | 400 | 5 |
| 17 | 500 | 5 |
| 18 | 0.1 | 0.05 |
| 19 | 0.1 | 0.1 |
| 20 | 0.1 | 1 |
| 21 | 0.1 | 4 |
| 22 | 0.1 | 6 |
| 23 | 50 | 0.05 |
| 24 | 50 | 0.1 |
| 25 | 50 | 1 |
| 26 | 50 | 4 |
| 27 | 50 | 6 |
| 28 | 290 | 0.05 |
| 29 | 290 | 0.1 |
| 30 | 290 | 1 |
| 31 | 290 | 4 |
| 32 | 290 | 6 |
| 33 | - | - |
| 34 | 20 | 3 |

When the surface of the polishing pad No. 6 was observed by electron microscope, it was confirmed that the water soluble solid materials having a diameter of 300 µm or more was not existed in an area of 1 cm². Namely, it was assumed that the particles of the water soluble solid material which were dispersed throughout the non-polishable matrix made of an organic material were not flocculated or not formed into a larger particle but were individually dispersed as single body in the matrix.

The polishing pads according this embodiment of the present invention can be suitably utilized in the formation of a Cu damascene wiring.

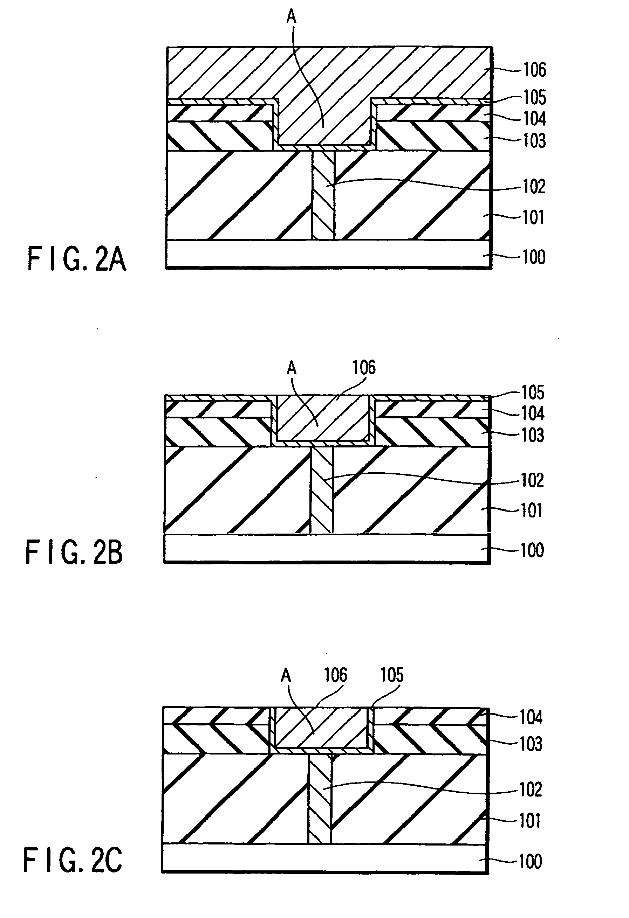

The procedures for the formation of this Cu damascene wiring will be explained with reference to FIGS. 2A to 2C.

First of all, as shown in FIG. 2A, a barrier metal film 105 and a wiring material film 106 were deposited on a semiconductor substrate 100 having semiconductor elements (not shown) formed thereon with an inorganic insulating film 101 and an insulating laminate films 103 and 104 being interposed therebetween.

The inorganic insulating film 101 was constructed such that a plug 102 formed of tungsten (W) was buried therein. The laminate insulating film includes a first insulating film 103 having a relative dielectric constant of less than 2.5, and a second insulating film 104 deposited on the first insulating film 103 and having a relative dielectric constant higher than that of the first insulating film 103.

The first insulating film 103 may be formed by using at least one selected from the group consisting of a film of a compound having a siloxane skeleton such as polysiloxane, hydrogen silsesquioxane, polymethylsiloxane and methylsilsesquioxane; a film containing mainly of an organic resin such as polyarylene ether, polybenzoxazole and polybenzocyclobutene; and a porous film such as a porous silica film. In this embodiment, the first insulating film 103 was formed by using LKD 5109 (JSR Co., Ltd.) to a thickness of 2000 angstroms.

The second insulating film 104 to be deposited on the first insulating film 103 functions as a cap insulating film and may be formed by using at least one insulating film having a relative dielectric constant of not less than 2.5 and selected from the group consisting, for example, of SiC, SiCH, SiCN, SiOC, SiN and SiOCH. The surface of the second insulating film 104 formed of these materials was hydrophobic. In this embodiment, the second insulating film 104 was formed by using black diamond (AMAT Co., Ltd.) to have a thickness of 1000 angstroms.

The barrier metal film 105 and the wiring material film 106 were deposited the entire surface of the substrate by sputtering method and plating after wiring trenches A was formed in the laminated insulating films 103 and 104. The barrier metal film 105 may be formed of a TaN film having a thickness of 200 angstroms, and the wiring material film 106 may be formed of a Cu film having a thickness of 5000 angstroms.

Incidentally, in the embodiment shown in FIG. 2A, although the insulating film on which the barrier metal film 105 and the wiring material film 106 were formed was constituted by a laminate structure including the first insulating film 103 and the second insulating film 104, this insulating film may be formed of a single layer of insulating film.

Next, the superfluous portions of the barrier metal film 105 and the wiring material film 106 were removed by CMP to expose the surface of the second insulating film 104. This CMP was performed in two steps, i.e. the removal of the wiring material film 106 (1st polishing), and the removal of the barrier metal film 105 (2nd polishing).

### (1st polishing)

First of all, the CMP was performed under the following conditions to expose the surface of the barrier metal film 105 as shown in FIG. 2B.
Slurry: CMS7303/7304 (JSR Co., Ltd.)
Feeding rate of slurry: 250 cc/min;
Polishing pad: IC1000 (trade name; Rodel Nitta Co., Ltd.);
Load: 300 gf/cm².

The rotational speed of the carrier and the turntable was both set to 100 rpm, and the polishing was continued for one minute. Since the polishing herein was stopped by the barrier metal film 105 and hence the hydrophobic second insulating film 104 was prevented from being exposed, the polishing was performed using a conventional polishing pad (IC1000). However, it is also possible to perform the polishing by using the polishing pad of the embodiments of the present invention.

### (2nd polishing)

Next, part of the barrier metal film 105 which was disposed over the second insulating film 104 was removed by polishing to expose the surface of the second insulating film 104 (touch-up step) as explained below.

First of all, 34 kinds of polishing pads that had been manufactured as described above were subjected to conditioning by using a blocky diamond dresser #80 (Noritake Co., Ltd.).

### Pressure of dresser: 100 gf/cm²;

Rotational speed of dresser/rotational speed of table: 20 rpm/20 rpm;
Flow rate of water: 300cc/min;
Conditioning period: 60 seconds.

The surface roughness of the field portion 13 of the surface of polishing pad after the conditioning was confined within the range of 1 to 3 µm.

In the touch-up step, it is demanded that the scratches that have been generated on the polishing surface in the 1st polishing should be eliminated and at the same time, the erosion and step portions that have been generated in the 1st polishing should be reduced. These requirements can be achieved by the employment of a polishing pad wherein the surface thereof is suitably roughened and the matrix thereof has a suitable degree of hardness.

A suitable degree of surface roughness can be provided by performing the conditioning of the surface. Generally, this can be achieved by working the surface of the matrix by using a diamond dresser where grain size thereof is confined to #50 to #500 or so, whereby the surface of the matrix is mechanically roughened or cut off to obtain a polishing pad (the field portion 13) having a surface roughness Ra of about 5 µm or less. The surface condition of the polishing pad after this conditioning would become as shown in FIG. 1B.

Incidentally, in the case of conventional polishing pad where an average diameter of cells is relatively large or the volume ratio of cells in the polishing pad is relatively high, the polishing pad is likely to be deformed during the dressing because of the reduction of the region of matrix in the polishing pad. As a result, it may become impossible to enable the polishing pad to sufficiently receive the mechanical action of the dresser, thus making it difficult to obtain an appropriate surface roughness corresponding to the grid size of the dresser. Whereas in the embodiments of the present invention, since the average diameter and volume ratio of the water soluble solid material to be dispersed throughout the matrix are confined within an appropriate range, it is made possible to easily obtain an appropriate surface roughness.

It is conceivable that the projected/recessed portion having a height or depth of 5 µm or less and formed on the surface of the polishing pad by conditioning may be transformed as it is pressed against the polishing surface under the polishing pressure during the polishing step, thus substantially vanishing the existence of projected/recessed portion. However, once this projected/recessed portion is released from the polishing pressure, this projected/recessed portion restores its original configuration and act to quickly remove coarse abrasive grains having a particle diameter of 10 µm or more and to enable it to retain only abrasive grains (effective abrasive grains which contribute to the polishing) which are prevented from becoming coarse particles.

In order to minimize the scratch by the quick removal of coarse abrasive grains from the surface of polishing pad, the compression elastic modulus of the polishing pad should preferably be confined within the range of 100 to 600 MPa, more preferably 300 to 600 MPa. As long as this condition of compression elastic modulus is satisfied, the polishing pad may be provided with suba 400 (trade name; Rodel Nitta Co., Ltd.) as an underlayer.

By using the aforementioned polishing pads No. 1 through No. 34 that have been undergone the conditioning as described above, the polishing was performed to expose the surface of the second insulating film 104 as shown in FIG. 2C.

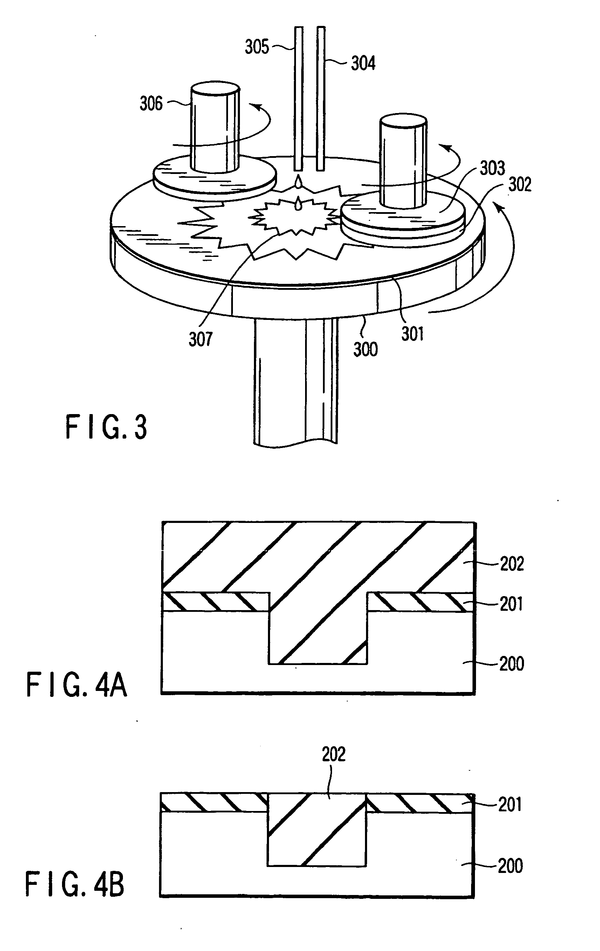

In this polishing step, a semiconductor substrate 302 sustained by a top ring 303 was press-contacted with a polishing pad 301 disposed on a turntable 300 under a load of 300 gf/cm² as shown in FIG. 3, and the turntable 300 and the top ring 303 were both rotated at a rotational speed of 100 rpm. On this occasion, slurry 307 was fed from a slurry supply port 305 onto the polishing pad 301 at a flow rate of 200 cc/min, and the polishing was performed for one minute. Incidentally, FIG. 3 also shows a dresser 306 for carrying out the conditioning of the polishing pad 301 as well as a pure water supply port 304.

The slurry 307 was prepared as follows. Namely, 5% by weight of colloidal silica (primary particle diameter: 20 nm) was dispersed into pure water to obtain a dispersion. Further, KOH was added as a pH adjustor to the dispersion to adjust the pH of the dispersion to about 9. Furthermore, 0.1 wt% of H₂O₂ as an oxidizing agent and 1 wt% of lactic acid as an additive were added to the dispersion. The resultant mixture was heated for 60 minutes at a temperature of 40°C to prepare the slurry wherein the flocculation of particles was accelerated. It was confirmed that the resultant slurry included coarse particles having a particle diameter of 1 µm or more at a ratio of 10,000/1 cc. In the case of a conventional slurry which is usually employed in the touch-up step, the ratio of coarse particles having a particle diameter of 1 µm or more is about 100/1 cc. In this embodiment, the polishing was performed using slurry containing a considerably large quantity of coarse particles, thus deliberately enhancing the severeness of slurry so as to investigate the effects of the polishing pad.

By a touch-up step, the wiring material film 106 was buried in the insulating film 104 to form a wiring having a line/space of: 0.1 µm/0.1 µm. The surface of this wiring was observed by using KLA2139 (KLA Co., Ltd.) to investigate the generation of scratches. Further, the generation of erosion was also investigated by using ALPHA-STEP200 (TENCOR INSTRUMENTS Co., Ltd.). The results obtained are shown together with the polishing rate of the TaN film in the following Table 2.

**Table 2**

| Polishing pad No. | Scratches (per 1 cm²) | Erosion (Å) | TaN polishing rate (Å/min.) |
|---|---|---|---|
| 1 | 72 | 380 | 722 |
| 2 | 19 | 290 | 872 |
| 3 | 16 | 292 | 877 |
| 4 | 10 | 210 | 850 |
| 5 | 9 | 222 | 820 |
| 6 | 16 | 243 | 855 |
| 7 | 18 | 280 | 845 |
| 8 | 6 | 290 | 800 |
| 9 | 3 | 265 | 803 |
| 10 | 7 | 260 | 810 |
| 11 | 8 | 250 | 830 |
| 12 | 22 | 290 | 821 |
| 13 | 38 | 290 | 885 |
| 14 | 51 | 382 | 830 |
| 15 | 29 | 370 | 830 |
| 16 | 76 | 280 | 827 |
| 17 | 88 | 290 | 811 |
| 18 | 680 | 433 | 672 |
| 19 | 20 | 300 | 802 |
| 20 | 15 | 300 | 854 |
| 21 | 18 | 295 | 820 |
| 22 | 32 | 254 | 777 |
| 23 | 21 | 220 | 700 |
| 24 | 20 | 210 | 862 |
| 25 | 9 | 260 | 801 |
| 26 | 8 | 285 | 896 |
| 27 | 16 | 357 | 850 |
| 28 | 88 | 200 | 800 |
| 29 | 5 | 210 | 820 |
| 30 | 15 | 254 | 824 |
| 31 | 6 | 260 | 803 |
| 32 | 28 | 350 | 895 |
| 33 | 730 | 420 | 688 |
| 34 | 10 | 220 | 810 |

It should be noted that it is acceptable as a product if the number of scratches in an area of 1 cm² of the polishing surface is confined to not more than 20 and if the magnitude of erosion in confined to not higher than 300 angstroms. Further, in viewpoint of stability of polishing, the polishing rate of TaN is required to be not less than 800 angstroms/min.

The polishing pads containing a water soluble solid material/cells having the aforementioned specific features can be employed until the residual thickness thereof becomes 0.3 mm or so.

In order to secure excellent results with respect to all of three features, i.e. scratch, erosion and polishing rate, the volume ratio of the water soluble solid material/cells dispersed in a matrix should be confined within the range of 1 vol.% to 4 vol.% based on the entire volume of the polishing pad. Further, in order to secure a sufficient duration of life while retaining a suitable degree of conditioning speed of polishing pad, the average diameter of the water soluble solid material/cells should preferably be confined within the range of 1 to 100 µm.

Whereas, if any one of conditions, i.e. average diameter and volume ratio of the water soluble solid material/cells dispersed in the matrix falls outside the aforementioned ranges as defined in the embodiments of the present invention, it would become impossible to satisfy all of the aforementioned conditions with respect to the scratch, erosion and TaN polishing rate.

When a polishing pad where an average diameter of the water soluble solid material was less than 0.05 µm (No. 1) was employed, not only the generation of scratches but also erosion became prominent and moreover, it was impossible to secure a sufficient degree of TaN polishing rate.

On the other hand, when a polishing pad where an average diameter of the water soluble solid material included in the matrix exceeded over 290 µm (Nos. 12-17) was employed, the generation of scratches became prominent.

Further, if a polishing pad containing no water soluble solid material (No. 33) was employed, non-uniformity in wetting of slurry or pure water was resulted. When the long-term stability of polishing pad is taken into consideration, there is possibility that particles may be adhered onto the surface of dry polishing pad, thereby occurring the possibility of generating scratches. When the volume ratio of the water soluble solid material was less than 0.1 vol.% (Nos. 18, 23 and 28), it was impossible to expect the effect of improving the wettability of the polishing pad. On the other hand, when the volume ratio of the water soluble solid material exceeded over 5 vol.% (Nos. 22, 27 and 32), the generation of scratches that had been once decreased was liable to increase again. This can be attributed to the fact that since the water soluble solid material was permitted to excessively exist, a large number of trap sites for coarse particles exist on the surface of the polishing pad.

Further, as described above, the conditioning of the polishing pad is performed in such a way that the matrix is mechanically roughened or cut off. Therefore, if the polishing pad contains a large number of cells or water soluble solid material dispersed therein, part of the matrix is erased as a large mass, thereby enabling recessed portions of as large as more than 5 µm to be formed locally. Moreover, the speed of the conditioning may be caused to accelerate to shortening the life of the polishing pad.

Therefore, according to the embodiments of the present invention, an average diameter of the water soluble solid material/cells dispersed in the polishing pad is confined within the range of 0.05 to 290 µm and the volume of the water soluble solid material/cells occupying the matrix is confined within the range of 1% by volume to 4% by volume based on the entire volume of the polishing pad.

Incidentally, the magnitude of roughness of the fine projected/recessed portions to be formed on the surface of the polishing pad by the conditioning can be optionally selected by taking into consideration the particle size of the coarse particles existing in the slurry. As already explained above, the scratches generate on the polishing surface mainly due to the presence of coarse particles, so that if the polishing pad is incapable of holding such coarse particles, the generation of the scratches can be minimized.

Furthermore, the polishing treatment by using the polishing pads according to the embodiments of the present invention is also applicable to the formation of STI (Shallow Trench Isolation).

The procedures for the formation of this STI will be explained with reference to FIGS. 4A and 4B.

First of all, as shown in FIG. 4A, a trench was formed in a semiconductor substrate 200 having a CMP stopper film 201 formed thereon, and then, an insulating film 202 was deposited the entire resultant substrate. In this case, SiN can be employed as the CMP stopper film 201. As for the insulating film 202, it is possible to employ an SiO₂ film which can be formed by HDP (High Density Plasma) method. Alternatively, carbon (C) can be also employed as the CMP stopper film 201, and a coat type insulating film such as an organic SOG can be also employed as the insulating film 202. Carbon and SiN that can be employed as the CMP stopper film 201 are hydrophobic in most cases. Moreover, since SiN has a ζ potential which is approximately equivalent to isoelectric point, the CMP stopper film 201 is susceptible to the generation of scratch due to the polishing.

Next, a superfluous portion of the insulating film 202 is removed by CMP to expose the surface of the CMP stopper film 201 as shown in FIG. 4B. The conditions for this CMP were as follows. As for the polishing pad, a sheet of foamed polyester (No. 35) where cells having an average diameter of 200 µm were distributed throughout the sheet (i.e. organic material) at ratio of 2 vol.% was prepared.
Slurry: 0.5 wt% ceria particle + 0.01 wt% polyacrylic acid + pure water (pH=6);
Flow rate of slurry: 300 cc/min;
Polishing pad: No. 35;
Load: 300 gf/cm².

The rotational speed of the carrier and the turn table was both set to 100 rpm, and the polishing was continued for one minute.

For the purpose of comparison, the polishing of the insulating film 202 was performed under the same conditions except that IC1000 was substituted for the polishing pad No. 35. This IC1000 was constructed such that the cells having an average diameter of about 30 µm were distributed throughout the polishing pad at a ratio of about 30 vol.% and the compression elastic modulus thereof was about 290 MPa.

Then, the surface of the stopper film 201 was observed after this polishing treatment by using KLA2139 (KLA Co., Ltd.). As a result, it was recognized that while the number of scratches on the surface of the stopper film 201 was 88/wafer when the IC1000 was employed, the number of scratches was reduced to 2/wafer when the polishing pad No. 35 was employed. It was confirmed from these facts that it was possible to greatly minimize the generation of scratch in the polishing process by using the polishing pads according to the embodiments of the present invention.

Incidentally, even when the polishing pads of Nos. 2-11, 19-21, 24-26, 29-31 and 34 are employed in the polishing of the insulating film 202, almost the same effects as described above are expected to be obtained.

Further, as long as the average diameter and the dispersion ratio are confined within the aforementioned ranges, the cells may be co-existed with the water soluble solid material in the matrix without substantially affecting the excellent effects that can be obtained as described above.

As described above, according to the embodiments of the present invention, it is possible to provide a polishing pad which is capable of polishing a treating surface at a high speed while making it possible to minimize the generation of scratch and erosion, and, at the same time, to provide a method of manufacturing a semiconductor device employing such a polishing pad.

According to the present invention, it is possible to manufacture a semiconductor device of high performance and high speed, which is provided with wirings having a design rule of 0.1 µm or less which will be demanded in wirings of the next generation, and therefore, the present invention would be very valuable in industrial viewpoint.

## Claims

1. A CMP pad which is abrasive-free and which comprises
a matrix (10) comprising an organic material and having a major surface, said surface having a roughness of 1 to 5 µm;
cells and/or a recessed portion-forming material both having an average diameter ranging from 0.05 to 290 µm and occupying a region (11) dispersed in the matrix, **characterized in that** the region is ranging from 1% by volume to 4% by volume based on an entire volume of the pad.

2. The CMP pad according to claim 1, **characterized in that** the CMP pad has a compression elastic modulus ranging from 100 to 600 MPa.

3. The CMP pad according to claim 1, **characterized in that** the CMP pad has a compression elastic modulus ranging from 300 to 600 MPa.

4. The CMP pad according to any one of claims 1 to 3, **characterized in that** the cells and/or a recessed portion-forming material respectively has an average diameter ranging from 1 to 100 µm.

5. The CMP pad according to any one of claims 1 to 4, **characterized in that** the organic material comprises at least one selected from the group consisting of 1,2-polybutadiene resin, ethylene-vinyl acetate copolymer polyethylene, polyester resin, diene elastomer, polyolefin elastomer, styrene type block copolymer-based elastomer, thermoplastic polyurethane-based elastomer, conjugated diene-based rubber, ethylene-α-olefin-based rubber and urethane resin.

6. The CMP pad according to any one of claims 1 to 5, **characterized in that** the recessed portion-forming material is a water soluble solid material.

7. The CMP pad according to claim 6, **characterized in that** the water soluble solid material is an organic water soluble solid material.

8. The CMP pad according to claim 7, **characterized in that** the organic water soluble solid material is formed of at least one selected from the group consisting of dextrin and cyclodextrin.

9. The CMP pad according to claim 6, **characterized in that** the water soluble solid material is an inorganic water soluble solid material.

10. A method of manufacturing a semiconductor device, which comprises:
forming a treating film above a semiconductor substrate; and
subjecting the treating film to polishing treatment using a polishing pad while feeding a slurry onto the treating film,
wherein the polishing pad is abrasive-free and comprises
a matrix (10) comprising an organic material and having a major surface which faces the treating film, said surface having a roughness of 1 to 5 µm;
cells and/or a recessed portion-forming material both having an average diameter ranging from 0.05 to 290 µm and occupying a region (11) dispersed in the matrix, **characterized in that** the region is ranging from 1% by volume to 4% by volume based on an entire volume of the pad.

11. The method according to claim 10, **characterized in that** the treating film is a conductive film deposited on an insulating film having a recessed portion and deposited above the semiconductor substrate, the treating film being subsequently subjected to the polishing treatment to form a wiring layer which is buried in the recessed portion.

12. The method according to claim 11, **characterized in that** the conductive film includes Cu film.

13. The method according to claim 11, **characterized in that** the insulating film is formed by a process wherein a first insulating film having a relative dielectric constant of less than 2.5 is formed at first, and then, a second insulating film having a higher relative dielectric constant than that of the first insulating film is deposited on the first insulating film.

14. The method according to claim 13, **characterized in that** the first insulating film is formed of a material selected from the group consisting of polysiloxane, hydrogen silsesquioxane, polymethylsiloxane, methylsilsesquioxane, polyarylene ether, polybenzoxazole, polybenzocyclobutene and a porous silica film.

15. The method according to claim 13, **characterized in that** the second insulating film is formed of a material selected from the group consisting of SiC, SiCH, SiCN, SiOC, SiN and SiOCH.

16. The method according to claim 10, which further comprises forming a trench on the semiconductor substrate prior to the forming of the treating film above the semiconductor substrate; the treating film being an insulating film deposited above the semiconductor substrate and subsequently subjected to the polishing treatment to form a pattern of the insulating film which is buried in the trench.

17. The method according to claim 16, **characterized in that** the insulating film is formed of a material selected from the group consisting of SiO₂ and organic SOG.

18. The method according to any one of claims 10 to 17, **characterized in that** the slurry contains abrasive grains.

19. The method according to any one of claims 10 to 18, **characterized in that** the recessed portion-forming material is formed of a water soluble solid material eluting from the matrix to form recessed portions on a surface of the polishing pad during the polishing treatment.

## Patentansprüche

1. Ein Kissen für chemisch-mechanisches Polieren, das Schleifmittel-frei ist und umfasst
eine Matrix (10), das ein organisches Material umfasst, und mit einer hauptsächlichen Oberfläche, die eine Rauigkeit von 1 bis 5 µm hat;
Zellen und/oder ein einen vertieften Teil bildendes Material, die bzw. das sowohl einen mittleren Durchmesser in einem Bereich von 0,05 bis 290 µm haben bzw. hat, als auch eine in der Matrix dispergierte Region (11) einnehmen bzw. einnimmt,
**dadurch gekennzeichnet, dass**
sich die Region von 1 Volumenprozent bis 4 Volumenprozent basierend auf dem gesamten Volumen des Kissens erstreckt.

2. Kissen für chemisch-mechanisches Polieren nach Anspruch 1,
**dadurch gekennzeichnet, dass**
das Kissen für chemisch-mechanisches Polieren einen Kompressionselastizitätsmodul in einem Bereich von 100 bis 600 MPa hat.

3. Kissen für chemisch-mechanisches Polieren nach Anspruch 1,
**dadurch gekennzeichnet, dass**
das Kissen für chemisch-mechanisches Polieren einen Kompressionselastizitätsmodul in einem Bereich von 300 bis 600 MPa hat.

4. Kissen für chemisch-mechanisches Polieren nach einem der Ansprüche 1 bis 3,
**dadurch gekennzeichnet, dass**
die Zellen und/oder das einen vertieften Teil bildende Material jeweils einen mittleren Durchmesser in einem Bereich von 1 bis 100 µm haben bzw. hat.

5. Kissen für chemisch-mechanisches Polieren nach einem der Ansprüche 1 bis 4,
**dadurch gekennzeichnet, dass**
das organische Material umfasst mindestens eines, gewählt aus der Gruppe bestehend aus 1,2-Polybutadienharz, Ethylen-Vinylacetat-Copolymer, Polyethylen, Polyesterharz, Dien-Elastomer, Polyolefin-Elastomer, Elastomer auf Basis eines Blockcopolymers vom Styrol-Typ, thermoplastisches Elastomer auf Basis eines Polyurethans, Kautschuk auf Basis eines konjugierten Diens, Ethylen/α-Olefin-basierender Kautschuk und Urethan-Harz.

6. Kissen für chemisch-mechanisches Polieren nach einem der Ansprüche 1 bis 5,
**dadurch gekennzeichnet, dass**
das den vertieften Teil bildende Material ein wasserlösliches festes Material ist.

7. Kissen für chemisch-mechanisches Polieren nach Anspruch 6,
**dadurch gekennzeichnet, dass**
das wasserlösliche feste Material ein organisches, wasserlösliches, festes Material ist.

8. Kissen für chemisch-mechanisches Polieren nach Anspruch 7,
**dadurch gekennzeichnet, dass**
das organische, wasserlösliche, feste Material aus mindestens einem, gewählt aus der Gruppe bestehend aus Dextrin und Cyclodextrin, erzeugt ist.

9. Kissen für chemisch-mechanisches Polieren nach Anspruch 6,
**dadurch gekennzeichnet, dass**
das wasserlösliche, feste Material ein anorganisches, wasserlösliches, festes Material ist.

10. Verfahren zum Herstellen einer Halbleitervorrichtung, das umfasst:
Erzeugen eines Behandlungsfilms über einem Halbleitersubstrat; und
Aussetzen des Behandlungsfilms einer polierenden Behandlung unter Verwendung eines Polierkissens, während des Zuführens eines Schlamms auf den Behandlungsfilm,
wobei das Polierkissen Schleifmittel-frei ist und umfasst
eine Matrix (10), das ein organisches Material umfasst, und mit einer hauptsächlichen Oberfläche, die dem Behandlungsfilm gegenüberliegt und eine Rauigkeit von 1 bis 5 µm hat;
Zellen und/oder ein einen vertieften Teil bildendes Material, die bzw. das sowohl einen mittleren Durchmesser in einem Bereich von 0,05 bis 290 µm haben bzw. hat, als auch eine in der Matrix dispergierte Region (11) einnehmen bzw. einnimmt,
**dadurch gekennzeichnet, dass**
sich die Region von 1 Volumenprozent bis 4 Volumenprozent basierend auf dem gesamten Volumen des Kissens erstreckt.

11. Verfahren nach Anspruch 10,
**dadurch gekennzeichnet, dass**
der Behandlungsfilm ein leitfähiger Film ist, der abgeschieden ist auf einem isolierenden Film, der einen vertieften Teil hat und auf dem Halbleitersubstrat abgeschieden ist, wobei der Behandlungsfilm nachfolgend der polierenden Behandlung ausgesetzt wird, um eine Leitungsschicht zu bilden, die in dem vertieften Teil eingegraben ist.

12. Verfahren nach Anspruch 11,
**dadurch gekennzeichnet, dass**
der leitfähige Film einen Cu-Film einschließt.

13. Verfahren nach Anspruch 11,
**dadurch gekennzeichnet, dass**
der isolierende Film durch ein Verfahren erzeugt wird, in dem zunächst ein erster isolierender Film mit einer relativen dielektrischen Konstante von weniger als 2,5 erzeugt wird, und danach ein zweiter Film, der eine höhere relative dielektrische Konstante als die des ersten isolierenden Films hat, auf dem ersten isolierenden Film abgeschieden wird.

14. Verfahren nach Anspruch 13,
**dadurch gekennzeichnet, dass**
der erste isolierende Film aus einem Material erzeugt wird, gewählt aus der Gruppe bestehend aus Polysiloxan, Wasserstoff-Silsesquioxan, Polymethylsiloxan, Methylsilsesquioxan, Polyarylenether, Polybenzoxazol, Polybenzocyclobuten und porösem Siliciumdioxid-Film.

15. Verfahren nach Anspruch 13,
**dadurch gekennzeichnet, dass**
der zweite isolierende Film erzeugt wird aus einem Material, gewählt aus der Gruppe bestehend aus SiC, SiCH, SiCN, SiOC, SiN und SiOCH.

16. Verfahren nach Anspruch 10, das weiter umfasst das Erzeugen eines Grabens auf dem Halbleitersubstrat, vor dem Erzeugen des Behandlungsfilms auf dem Halbleitersubstrat; wobei der Behandlungsfilm ein isolierender Film ist, der auf dem Halbleitersubstrat abgeschieden ist, und nachfolgend der polierenden Behandlung ausgesetzt wird, um ein Muster des isolierenden Films zu bilden, der in dem Graben eingegraben ist.

17. Verfahren nach Anspruch 16,
**dadurch gekennzeichnet, dass**
der isolierende Film erzeugt ist aus einem Material, gewählt aus der Gruppe bestehend aus SiO₂ und organischem SOG.

18. Verfahren nach einem der Ansprüche 10 bis 17,
**dadurch gekennzeichnet, dass**
der Schlamm Schleifmittelkörner enthält.

19. Verfahren nach einem der Ansprüche 10 bis 18,
**dadurch gekennzeichnet, dass**
das den vertieften Teil bildende Material erzeugt ist aus einem wasserlöslichen, festen Material, das sich aus der Matrix herauslöst, um während der polierenden Behandlung vertiefte Teile auf einer Oberfläche des Polierkissens zu bilden.

## Revendications

1. Tampon de polissage mécano-chimique non abrasif comprenant :
une matrice (10) composée d'un matériau organique et ayant une surface majeure, ladite surface ayant une rugosité allant de 1 à 5 µm ;
des cellules et/ou un matériau formant une partie en creux, tous deux ayant un diamètre moyen allant de 0,05 à 290 µm et occupant une zone (11) dispersée dans la matrice, **caractérisé en ce que** la zone occupe de 1 % en volume à 4 % en volume du tampon par rapport à un volume total du tampon.

2. Tampon de polissage mécano-chimique selon la revendication 1, **caractérisé en ce que** le tampon de polissage mécano-chimique a un module d'élasticité en compression allant de 100 à 600 MPa.

3. Tampon de polissage mécano-chimique selon la revendication 1, **caractérisé en ce que** le tampon de polissage mécano-chimique a un module d'élasticité en compression allant de 300 à 600 MPa.

4. Tampon de polissage mécano-chimique selon l'une quelconque des revendications 1 à 3, **caractérisé en ce que** les cellules et/ou un matériau formant une partie en creux ont respectivement un diamètre moyen allant de 1 à 100 µm.

5. Tampon de polissage mécano-chimique selon l'une quelconque des revendications 1 à 4, **caractérisé en ce que** le matériau organique se compose d'au moins une substance sélectionnée dans le groupe constitué par la résine de 1,2-polybutadiène, le copolymère éthylène/acétate de vinyle, le polyéthylène, la résine polyester, l'élastomère diénique, l'élastomère de polyoléfine, l'élastomère de type styrène à base de copolymère bloc, l'élastomère à base de polyuréthane thermoplastique, le caoutchouc à base de diène conjugué, le caoutchouc à base d'éthylène/α-oléfine et la résine uréthane.

6. Tampon de polissage mécano-chimique selon l'une quelconque des revendications 1 à 5, **caractérisé en ce que** le matériau formant une partie en creux est un matériau solide soluble dans l'eau.

7. Tampon de polissage mécano-chimique selon la revendication 6, **caractérisé en ce que** le matériau solide soluble dans l'eau est un matériau organique solide soluble dans l'eau.

8. Tampon de polissage mécano-chimique selon la revendication 7, **caractérisé en ce que** le matériau organique solide soluble dans l'eau est constitué d'au moins une substance choisie dans le groupe constitué par la dextrine et la cyclodextrine.

9. Tampon de polissage mécano-chimique selon la revendication 6, **caractérisé en ce que** le matériau solide soluble dans l'eau est un matériau inorganique solide soluble dans l'eau.

10. Procédé de fabrication d'un dispositif semi-conducteur consistant à :
former un film de traitement au-dessus d'un substrat semi-conducteur ; et
soumettre le film de traitement à un traitement de polissage en utilisant un tampon de polissage tout en faisant passer une pâte sur le film de traitement,
dans lequel le tampon de polissage est non abrasif et comprend :
une matrice (10) composée d'un matériau organique et ayant une surface majeure faisant face au film de traitement, ladite surface ayant une rugosité allant de 1 à 5 µm ;
des cellules et/ou un matériau formant une partie en creux, tous deux ayant un diamètre moyen allant de 0,05 à 290 µm et occupant une zone (11) dispersée dans la matrice, **caractérisé en ce que** la zone occupe de 1 % en volume à 4 % en volume du tampon par rapport à un volume total du tampon.

11. Procédé selon la revendication 10, **caractérisé en ce que** le film de traitement est un film conducteur déposé sur un film isolant ayant une partie en creux et déposé au-dessus du substrat semi-conducteur, le film de traitement étant ensuite soumis à un traitement de polissage pour former une couche conductrice qui est enterrée dans la partie en creux.

12. Procédé selon la revendication 11, **caractérisé en ce que** le film conducteur comprend un film de cuivre.

13. Procédé selon la revendication 11, **caractérisé en ce que** le film isolant est formé par un procédé dans lequel un premier film isolant ayant une constante diélectrique relative de moins de 2,5 est tout d'abord formé puis un second film isolant ayant une constante diélectrique relative supérieure à celle du premier film isolant est déposé sur le premier film isolant.

14. Procédé selon la revendication 13, **caractérisé en ce que** le premier film isolant est constitué d'un matériau choisi dans le groupe constitué par le polysiloxane, le silsesquioxane d'hydrogène, le polyméthylsiloxane, le méthylsilsesquioxane, l'éther de polyarylène, le polybenzoxazole, le polybenzocyclobutène et un film de silice poreuse.

15. Procédé selon la revendication 13, **caractérisé en ce que** le second film isolant est constitué d'un matériau choisi dans le groupe constitué par SiC, SiCH, SiCN, SiOC, SiN et SiOCH.

16. Procédé selon la revendication 10, qui comprend en outre une tranchée sur le substrat semi-conducteur formée avant la formation du film de traitement au-dessus du substrat semi-conducteur ; le film de traitement étant un film isolant déposé au-dessus du substrat semi-conducteur puis soumis à un traitement de polissage pour former un motif du film isolant qui est enterré dans la tranchée.

17. Procédé selon la revendication 16, **caractérisé en ce que** le film isolant est constitué d'un matériau choisi dans le groupe constitué par Si02 et SOG organique.

18. Procédé selon l'une quelconque des revendications 10 à 17, **caractérisé en ce que** la pâte contient des grains abrasifs.

19. Procédé selon l'une quelconque des revendications 10 à 18, **caractérisé en ce que** le matériau formant une partie en creux est constitué d'un matériau solide soluble dans l'eau qui est élué de la matrice pour former des parties en creux sur une surface du tampon de polissage durant le traitement de polissage.
